Europäisches Patentamt

European Patent Office

Office européen des brevets

(19)

(11) Publication number: **0 047 779**
**B1**

(12) # EUROPEAN PATENT SPECIFICATION

(45) Date of publication of patent specification: **04.06.86**

(51) Int. Cl.⁴: **G 01 B 11/26, H 04 B 9/00**

(21) Application number: **81900903.6**

(22) Date of filing: **13.03.81**

(86) International application number:
**PCT/US81/00317**

(87) International publication number:
**WO 81/02782 01.10.81 Gazette 81/23**

(54) **APPARATUS FOR NIGHTTIME AND LOW VISIBILITY ALIGNMENT OF COMMUNICATORS.**

(30) Priority: **17.03.80 US 130637**

(43) Date of publication of application:
**24.03.82 Bulletin 82/12**

(45) Publication of the grant of the patent:
**04.06.86 Bulletin 86/23**

(84) Designated Contracting States:
**FR GB**

(56) References cited:
**DE-B-1 516 635**
**FR-A-2 251 803**
**FR-A-2 350 010**
**US-A-2 153 709**
**US-A-2 982 859**
**US-A-3 504 182**
**US-A-3 511 998**
**US-A-3 907 435**
**US-A-3 941 483**
**US-A-4 039 825**
**US-A-4 158 885**
**US-A-4 185 919**

(73) Proprietor: **Hughes Aircraft Company**
**Centinela & Teale Streets**
**Culver City California 90230 (US)**

(72) Inventor: **CINZORI, Robert J.**
**784 Mariquita Drive**
**Santa Barbara, CA 93111 (US)**

(74) Representative: **Milhench, Howard Leslie et al**
**A.A. Thornton & Co. Northumberland House**
**303/306 High Holborn**
**London, WC1V 7LE (GB)**

Courier Press, Leamington Spa, England.

## Description

The present invention relates to a communicator apparatus which is particularly suited for use in transmission systems wherein it is necessary to align a receiver to an incoming laser transmission and to maintain the good alignment in conditions of low visibility.

Apparatus for aligning with a laser beam is known, see for example United States Patent No. US—A—3,941,483. The system disclosed in that patent has the features defined in the preamble of present claim 1, and is concerned with apparatus for guiding a pilot of an aircraft to a target illuminated by a pulsed laser beam which is reflected to apparatus within the aircraft. The electrical circuits of such apparatus are necessarily complicated, involving dating circuitry and in order to provide a useful aid to the pilot, a display is provided indicating the direction in which the pilot should steer the aircraft.

Also known from US—A—2982859 is a light communication system in which separate photoelectric channels are used for communication and beam alignment control. Hand-held communicators are well-known, see e.g. DE—A—1516635. Also known, from e.g. US—A—3907435 and US—A—4039825 are display means which provide a display pattern corresponding to the pattern of a light beam position sensing detector.

It is an object of the present invention to provide a simple and effective means for use in aligning communicator apparatus with an incoming radiation beam, which is suitable for use in a pair of optical communicators, one or more of which may be hand-held or having an otherwise unstable base.

The present invention provides communicator apparatus including infra-red radiation detection means for detecting an incoming beam of infra-red radiation carrying a communication signal, and focusing means for focusing said incoming beam onto said detection means, said detection means comprising a plurality of independent detector portions (A,B,C,D) arranged so that particular portions or parts of said portions are illuminated by the focused beam of radiation in dependence on the relative position of the incoming beam of radiation with respect to the axis of the detection means and focusing means and are arranged to provide respective electrical signals from each detector portion representative of the degree of illumination of each respective portion illuminated, characterised by circuit means for branching the electrical signals into two channels, a plurality of electro-luminescent devices arranged in one channel in a pattern corresponding to the geometry of said detector portions and coupled to receive said electrical signals so that the devices provide an illuminated pattern indicative of the degree of illumination of the detector portions illuminated, OR gate means in the other channel for combining the electrical signals from all detector portions to provide an output signal, and means connected to said OR gate to extract said communication signal from said output signal.

As preferred, the preamplifier means connected to said detector portions to receive said electrical signals, integrator means in said one channel coupled between the preamplifier means and the electroluminescent devices and threshold means in said other channel coupled between said preamplifier means and said OR gate means.

Brief Description of the Drawings

Referring now to the drawings, in which like numerals represent like parts throughout:

FIG. 1 presents a conceptual view of a field communication by means of a pair of optical communicators, each including the alignment apparatus of the present invention whereby a common line-of-sight therebetween is obtained;

FIG. 2 is a partial sectional view of an optical communicator according to the present invention illustrating the laser transceiver 28 and its orientation within the outer cylinder 26;

FIG. 3 is an electromechanical schematic view of the line-of-sight detection system of the present invention;

FIG. 4a is a side view of a communicator for use with the present invention illustrating the misalignment of the receiver in the vertical plane;

FIG. 4b is a planar view of the detector of the receiver of FIG. 4a, showing the movement of the blur circle thereon as a result of the alignment shown in FIG. 4a;

FIG. 4c is a view of the monocular eyepiece of the present invention;

FIG. 4d is a view of the monocular eyepiece as illuminated by the shifted blur circle of FIG. 4b;

FIG. 5a is a top view of a communicator for use with the present invention illustrating the misalignment of the receiver in the horizontal plane;

FIG. 5b is a planar view of the detector of the receiver of FIG. 5a showing the movement of the blur circle thereon as a result of the alignment shown in FIG. 5a; and

FIG. 5c is a view of the monocular eyepiece as illustrated by the shifted blur circle of FIG. 5b.

Detailed Description of the Invention

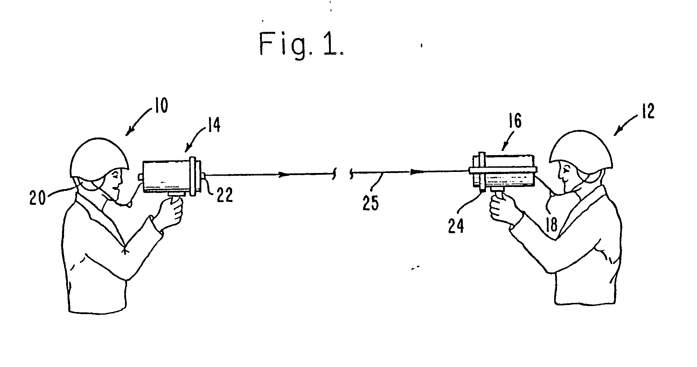

FIG. 1 presents a conceptual illustration of communication between a first (speaking or transmitting) operator 10 and a second (receiving or listening) operator 12 by means of the identical optical communicators 14, 16, respectively. It is seen that the communicators 14, 16 present relatively lightweight, compact units which may be hand-held during operation. Such units have been fabricated, generally cylindrical in nature, having a transceiver (not shown in FIG. 1) diameter of 1.6 inches and a length of approximately 7 inches positioned inside an outer cylinder, shown in FIG. 1, having a 3.7 inch diameter and a length of 10 inches. The communicators 14, 16 utilize the monoculars 22, 24 to obtain a line of sight 25 therebetween. Each operator is equipped with a headset having an earpiece 20, electrically coupled to the receiver electronics, and a microphone 18, electrically coupled to the transmitter electronics. Essentially, communication of voice is accomplished by transforming the voice of the transmitting operator 10 into a pulsed laser transmission over the optical path or ray 25. This "transformation" of voice or other data into a laser transmission is achieved by means of the modulation of the laser energy which travels over the path 25. The listening operator 12 receives the encoded laser transmission at the detector of his transceiver. The transmitted energy is converted into an electrical signal which, through standard transducer means, is "heard" after demodulation and decoding by the second operator 12 over his headset. Electronics appropriate for the modulation and demodulation of such a pulsed transmission is disclosed, for a multiple signal case, in United States Patent No. 4,169,213 of R. A. Dye et al for "Apparatus and Method for Ordering Independent Signals", the property of the assignee herein. It is essential that the operators 10, 12 maintain both transceivers housed within the communicators 14, 16 upon approximately coincident optical paths for the effective transmission and detection of the transmitted (laser) energy and associated signal content. It is additionally imperative that the line-of-sight 25 be held and maintained as accurately as possible as a transmission on the "edge" of the field-of-view of the receiving communicator is subject to data loss through scintillation, e.m.i. and related effects. The process by which the transmission path 25 of a first transceiver is utilized to orient a second, receiving transceiver is known in the art as "reciprocal tracking".

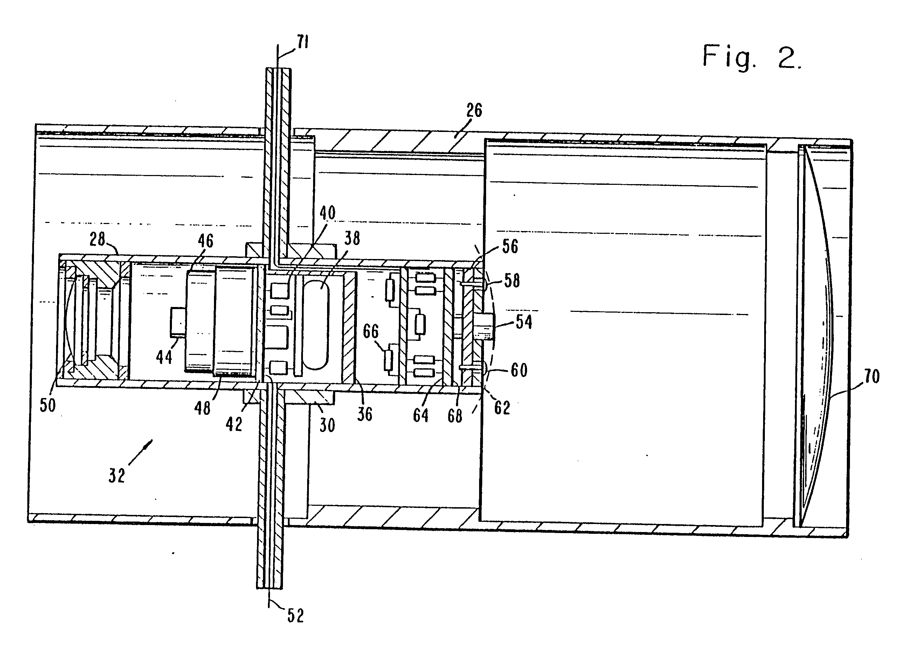

Referring to FIG. 2, the (hollow) interior of the (outer) cylinder 26 is shown with the transceiver 28, secured by means of a holder 30, within the (outer) cylinder 26. The (inner) cylinder or optical transceiver 28 is secured to the holder 30 by the tensioning of a pair of fastening screws.

The transceiver 28 may be seen in FIG. 2 to be divided internally into opposed transmitter and receiver sections separated by an internal partition 36. The transmitter electronics section 32 includes a ring up transformer 38 which provides power to pulser electronics 40 mounted on a printed circuit board 42. The aforementioned serves to drive a compact GaAs laser diode 44 which is mounted on a heat sink 46 and a holding fixture 48. A transmitter lens system 50 serves to maintain a predetermined solid angle of optical transmission. A conductor 52 provides electrical connection between the transmitter and the operator microphone.

The optical center of the transmitter lens system 50 is intersected by the coincident axes of the cylinder 26 and the cylindrical transceiver 28. Also, coincident therewith, is the center of the IR quadrature (i.e., four equal segments) detector 54 of the receiver section 34. The detector 54 may be any of a number of well-known devices chosen principally for efficiency at the wavelength of interest. The selection of an appropriate detector technology hinges also upon signal-to-noise ratio considerations. For example, an avalanche detector is most desirable in low background noise applications, due to its internal current gain. Unfortunately, the current gain of an avalanche detector acts upon both signal and noise. Thus, while signal current is multiplied by a factor M (set by adjusting the dc bias level of the quadrature detector 98), the detector noise current, which is a function of the background return and detector internal leakage current, is multiplied $M^d$, where d can vary from 1.5 to 2. Therefore, as the multiplication factor of the detector 54 is increased, the system S/N ratio is decreased. Generally, the limit of multiplication a system can tolerate is reached when the detector noise (with background) equals the receiver preamplifier noise. As the field-of-view is increased, the background noise begins to increase proportionately with the square thereof, and a background noise limiting situation is rapidly approached. A theoretical cross-over point, easily calculable, is then reached at which a PIN detector will provide a more favorable S/N ratio than an avalanche detector. The existence of such cross-over point is partially a reflection of the greater quantum efficiency of the PIN detector.

The quadrature detector 54 is mounted upon a washer 56. The washer 56 and the associated detector 54 are manually positioned by adjustment of the alignment screws 58, 60 to assure that the detector 54 remains within a predetermined focal spherical surface 62 when rotated in the elevation plane. The output of the detector 54 is applied to the preamplifier mounted upon the printed circuit boards e.g. 68. A composite conductor 71 provides electrical paths to the receiver electronics and to light emitting diodes mounted in the monocular eyepiece which provide a significant aspect of the present invention.

A spherical mirror 70 is positioned at the rear or closed end of the (outer) cylinder 26. The quadrature detector 54 is located at the focal plane 62 (approximately one-half the radius of curvature) of the mirror 70.

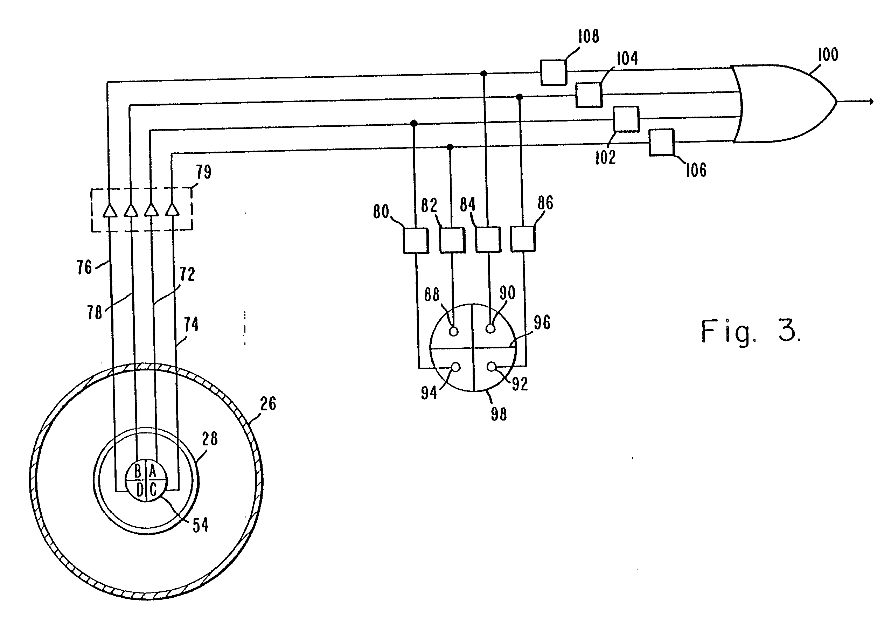

FIG. 3 is an electro-mechanical schematic view of the circuitry of the present invention. The quadrature detector 54, divided into the labeled segments A, B, C and D, is mounted concentrically with the cross sections of the transceiver cylinder 28 and the outer cylinder 26. The conductors 72, 74, 76 and 78 transmit the currents independently generated by the incidence of portions of the incoming radiation upon the individual segments. (The four conductors may be gathered, along with the conductor connecting the detector to the receiver electronics, into the composite conductor 71.) The currents therein are fed into the preamplifier electronics 79 and then to four separate fast attack, slow decay pulse integrators 80, 82, 84 and 86 which produce the voltages that drive the LED's 88, 90, 92, 94 mounted in the quadrants defined by the reticle 96 of the monocular eyepiece 98. The communication or data signal is extracted at the receiver electronics after the combination of the four (A, B, C and D) quadrant outputs in the OR gate 100 (after thresholding the signals through the comparators 102, 104, 106 and 108 to ascertain whether or not signal, as opposed to background noise, has been received). The output of the OR gate 100 is then applied to the listener's receiver demodulator electronics which may be located in the headset electronics.

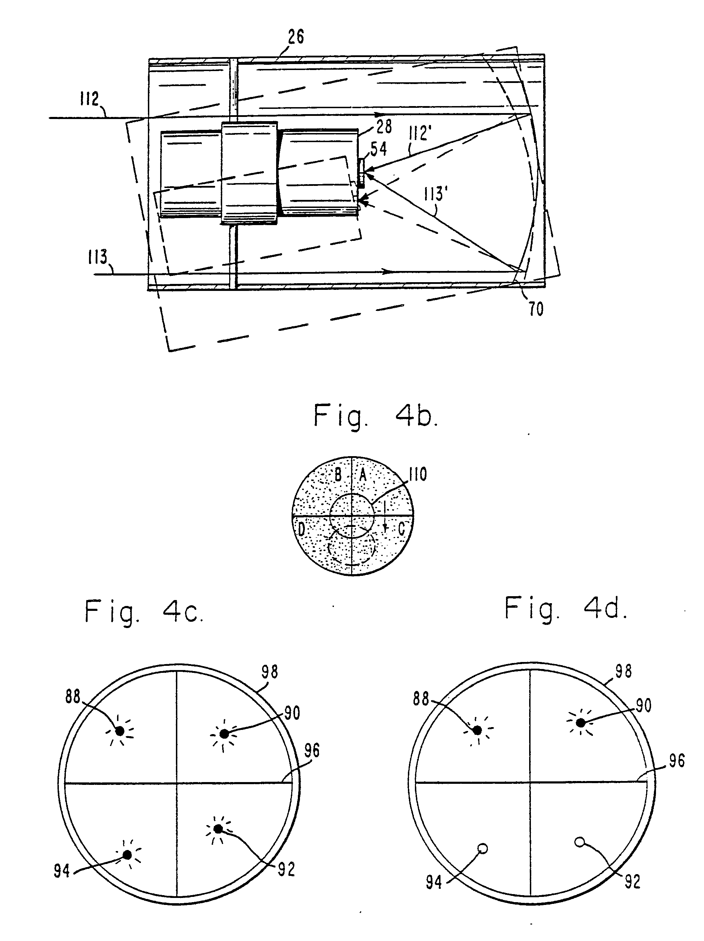

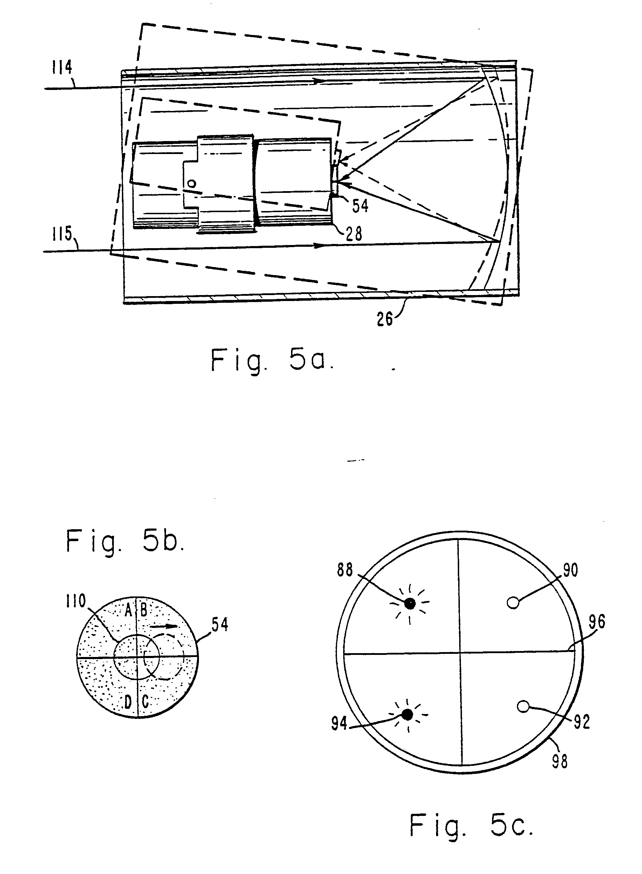

The operation and mode of use of the present invention may be observed by examining the situations illustrated in FIGS. 4(a), (b) and (c) and 5(a), (b) and (c) with respect to the electro-mechanical diagram of FIG. 3. In FIG. 4(a) there is illustrated a side view (similar to the view of FIG. 2) of the transceiver 28 mounted within the outer cylinder 26. Initially, the blur circle 110, which represents the location of the incident radiation upon the surface of the quadrature detector 54 after its reflection off the spherical mirror 70, is assumed to be centered upon the detector (shown by the solid circle in FIG. 4b). The currents in the four conductors 72, 74, 76 and 78 and, therefore, the voltages applied to the LED's from the integrators 80, 82, 84 and 86, are equal. As a result, the four LED's 88, 90, 92 and 94 are equally illuminated as shown in FIG. 4(c). (The assumption that the blur circle 11) lies at the center of the detector 54, implies that rays of incident radiation such as the rays 112, 113 arrive at the communicator approximately perpendicular to the surface of the detector 54. As is well known in the field of optics, such rays, after reflection from the spherical mirror 70, will be focused upon the detector 54 at the center of the focal spherical plane.)

The dashed image of the communicator in FIG. 4a represents its position after an (inadvertent) amount of counterclockwise rotation has occurred. Such translation of position might occur as a result of a bouncy platform, commonly incurred with ship-to-ship or ship-to-shore communications, or might result from the fact that human pointing errors of less than ±1° are considered unrealistic. Such a small pointing error, although often admirable and satisfactory in many applications, can quickly bring a transmission to the "edge" when a narrow field-of-view is necessitated. The movement of the outer cylinder 26 to the dashed position produces a rotation of the mirror 70. The result of such movement is thus: rays of the incoming transmission lying above the transceiver 28, such as the ray 112, contact the mirror 70 (after rotation) at a point such that the distance traveled to the mirror 70 is shorter than before, as a result of which the ray 112 contacts the mirror's surface at a more acute angle than previously. The reflected ray, of course, identically contacts the mirror at a more acute angle, the net result of which is a greater divergence of the reflected beam 112 from the incident beam 112'. Likewise, portions of the transmission which lie below the transceiver 28 travel a greater distance before striking the mirror 70 than before. This results in a less acute angle of incidence than before and a smaller divergence of incident ray 113 from reflected ray 113'. The sum of these effects can be seen in FIG.

4b where there is indicated (by arrow and dashed circle) the downward rotation of the blur circle 110 on the surface of the detector 54 that accompanies the movement illustrated in FIG. 4a. Referring back to FIG. 3, this movement of the blur circle 110 results in a diminution of the currents carried along the conductors 72, 78 and an increase in the currents along the conductors 74, 76. Consequently, the voltages applied to the LED's 88, 90 by the integrators 82, 84 will exceed those applied to the LED's 92, 94 by the integrators 86, 80 respectively. The corresponding state of the eye-piece 98 of the monocular, as shown in FIG. 4d, thus comprises a fully illuminated pair of upper half LED's 88, 90, and an unilluminated or lesser intensity pair of lower half LED's 92, 94. The operator, viewing such a pattern, is informed that he is now receiving a transmission "on the edge" and hence directed to rotate the communicator's outer cylinder 26 upward (in the direction of the illuminated LED's) to restore a good field-of-view with the transmitting communicator. In such a manner, easily learned by the listener, a nighttime communication can be kept on target so that transmission "drop out" — a very serious error in terms of nighttime corrections and/or compensation — can be avoided.

In FIG. 5a, a top view of a communicator, the outer cylinder 26 is seen to have become misaligned with respect to the incoming transmission as the result of an unintended clockwise rotation or torque. Once again optical effects, analogous to those described above, act upon the incident radiation to cause the ray 114 to the right of the transceiver 28 to diverge upon reflection from the mirror 70 less than before while the ray 115, arriving on the left hand side of the transceiver 28, diverges, upon reflection from the mirror, a greater amount than before. The net result of these effects is indicated in FIG. 5b by the arrow and dashed circle indicating the rightward movement of the blur circle 110 on the surface of the detector 54. As a result of this movement, the currents carried by the conductors 72, 74 increase while those carried by the conductors 76, 78 decrease. The relative current values result in a greater voltage output from the integrators 80, 82 than from the integrators 84, 86 and a corresponding increase in the illumination afforded by the LED's 88, 94 relative to that afforded by the LED's 90, 92. The pattern thereby superimposed upon the eyepiece of the monocular is shown in FIG. 5c to consist of a brightly illuminated pair of LED's 88, 94 to the left hand side of the reticle 96 and a dimly (if at all) illuminated pair of LED's 90, 92 to the right hand side of the reticle 96. Once again, the listener is notified that his hand movements and the like have moved the communicator off center and he is now at the "edge" and close to transmission drop out. To correct therefor, he must rotate the front of the communicator toward the illuminated half of the eye-piece (that is, counterclockwise) until the full complement of eyepiece LED's is illuminated as before.

Thus, it is seen that the present invention affords

the user (listener) of a communication system of the nature described an easily understood and implemented apparatus and method for maintaining a "good" line-of-sight so that maximum transmission/reception quality can be maintained. The apparatus of the present invention, which employs, inter alia, illuminative elements, solves critical nighttime communication problems by allowing the user a convenient, nondistracting means for analyzing the varying quality of communication and may be employed to guard against the transmission drop out that would otherwise greatly degrade the nighttime usefulness of such apparatus.

In actual nighttime operation, the present invention might be employed in conjunction with an acquisition or "hailing" system such as that described in "GaAs Laser Communicator Acquisition System" by R. A. Dye and C. R. Berry (Santa Barbara Research Center Information Paper, March 1974) which determines the absence or presence of transmitting activity in the sector of interest. The system described in the above paper includes, inter alia, apparatus for performing scanning and filtering functions in conjunction with a "maximum likelihood" detection scheme whereby the presence of an active (transmitting) communicator in the sector of interest can be determined. Once such a determination has been made, the listener need only scan the horizon while observing the illumination pattern of the LED's of the monocular in accordance with the teachings herein to obtain (and maintain) a good (full reception) line-of-sight with the transmitting communicator.

## Claims

1. Communicator apparatus including infra-red radiation detection means (54) for detecting an incoming beam of infra-red radiation carrying a communication signal, and focusing means (70) for focusing said incoming beam onto said detection means comprising a plurality of independent detector portions (A, B, C, D) arranged so that particular portions or parts of said portions are illuminated by the focused beam of radiation in dependence on the relative position of the incoming beam of radiation with respect to the axis of the detection means and focusing means and are arranged to provide respective electrical signals from each detector portion representative of the degree of illumination of each respective portion illuminated, characterised by circuit means for branching the electrical signals into two channels, a plurality of electro-luminescent devices (88—94) arranged in one channel in a pattern corresponding to the geometry of said detector portions and coupled to receive said electrical signals so that the devices provide an illuminated pattern indicative of the degree of illumination of the detector portions illuminated, OR gate means (100) in the other channel for combining the electrical signals from all detector portions to provide an output signal, and means connected to said OR gate to extract said communication signal from said output signal.

2. Apparatus as claimed in claim 1 including preamplifier means (79) connected to said detector portions to receive said electrical signals, integrator means (80—86) in said one channel coupled between the preamplifier means and the electroluminescent devices, and the threshold means (102—108) in said other channel coupled between said preamplifier means and said OR gate means.

## Revendications

1. Appareil de transmission comprenant des moyens de détection (54) de rayonnement infrarouge pour détecter un faisceau d'entrée de rayonnement infrarouge portant un signal de transmission, et des moyens de concentration (70) pour concentrer ledit faisceau d'entrée sur lesdits moyens de détection, ces moyens de détection comprenant un certain nombre de régions détectrices indépendantes (A, B, C, D) disposées de manière que des régions ou des parties particulières desdites régions soient éclairées par le faisceau concentré de rayonnement en fonction de la position relative du faisceau d'entrée de rayonnement par rapport à l'axe des moyens de détection et de concentration et soient disposées de manière que chaque région détectrice délivre respectivement un signal électrique représentatif du degré d'éclairement de la région éclairée correspondante, caractérisé par des moyens formant circuit pour acheminer les signaux électriques le long de deux voies, un certain nombre de dispositifs électroluminescents (88, 90, 92, 94) disposés dans la première voie selon un motif correspondant à la géométrie desdites régions détectrices et raccordés pour recevoir lesdits signaux électriques de sorte que ces dispositifs fournissent un motif lumineux représentatif du degré d'éclairement des parties détectrices éclairées, des moyens formant porte OU (100) dans la seconde voie pour combiner les signaux électriques provenant de toutes les régions détectrices pour délivrer un signal de sortie, et des moyens raccordés à ladite porte OU pour prélever ledit signal de transmission dudit signal de sortie.

2. Appareil de transmission conforme à la revendication 1, comprenant des moyens préamplificateurs (79) reliés auxdites régions détectrices pour recevoir lesdits signaux électriques, des moyens intégrateurs (80, 82, 84, 86) dans ladite première voie raccordés entre les moyens préamplificateurs et les dispositifs électroluminescents, et des moyens à seuil (102, 104, 106, 108) dans ladite seconde voie raccordés entre lesdits moyens préamplificateurs et lesdits moyens formant porte OU.

## Patentansprüche

1. Kommunikationsvorrichtung mit einer Infrarotstrahlung-Erfassungseinrichtung (54) zur Erfassung eines einlaufenden Infrarotstrahlungsbündels, das ein Kommunikationssignal trägt, und einer Scharfeinstelleinrichtung, wobei die Erfassungseinrichtung eine Vielzahl unabhängiger Detektorbereiche (A, B, C, D) umfaßt, die so angeordnet sind, daß besondere Bereiche oder Teile der Bereiche von dem scharfeingestellten Strahlungsbündel in Abhängigkeit von der relativen Lage des einlaufenden Strahlungsbündels in Bezug auf die Achse der Erfassungseinrichtung und der Scharfeinstelleinrichtung beleuchtet werden und entsprechende elektrische Signale von jedem Detektorbereich geliefert werden, die das Maß der Beleuchtung von jedem entsprechenden, beleuchteten Bereich darstellen, gekennzeichnet, durch eine Schaltungsanordnung zum Verzweigen der elektrischen Signale in zwei Kanäle, eine Vielzahl von Elektrolumineszenz-Einrichtungen (88—94), die in einem Kanal in einem Muster angeordnet sind, das der Geometrie der Detektorbereiche entspricht, und gekoppelt sind, die elektrischen Signale zu erhalten, so daß die Einrichtungen ein Leuchtmuster liefern, das das Maß der Beleuchtung der beleuchteten Detektorbereiche darstellt, eine ODER-Toreinrichtung (100) in dem anderen Kanal, um die elektrischen Signale von allen Detektorbereichen zu kombinieren, um ein Ausgangssignal zu liefern, und eine mit dem ODER-Tor verbundene Einrichtung, um das Kommunikationssignal aus dem Ausgangssignal herauszuziehen.

2. Vorrichtung nach Anspruch 1 mit einer Vorverstärkereinrichtung (79), die mit den Detektorbereichen verbunden ist, die elektrischen Signale zu erhalten, einer Integrationseinrichtung (88—86) in dem einen Kanal, die zwischen der Vorverstärkereinrichtung und den Elektrolumineszenzeinrichtungen gekoppelt ist, und der Schwelleneinrichtung (102—108) in dem anderen Kanal, die zwischen der Vorverstärkereinrichtung und der ODER-Toreinrichtung gekoppelt ist.

Fig. 1.

Fig. 2.

Fig. 3.

0 047 779

0 047 779

Fig. 4b.

Fig. 4c.                              Fig. 4d.

4

Fig. 5a.

Fig. 5b.

Fig. 5c.